Europäisches Patentamt

European Patent Office

Office européen des brevets

(11) Numéro de publication : **0 104 979**
**B1**

# (12) FASCICULE DE BREVET EUROPÉEN

(45) Date de publication du fascicule du brevet :
09.11.88

(51) Int. Cl.⁴ : **H 05 B   1/02**

(21) Numéro de dépôt : **83401739.4**

(22) Date de dépôt : **02.09.83**

(54) Appareil électrique à accumulation calorique à commutation progressive.

(30) Priorité : 24.09.82 FR 8216098

(43) Date de publication de la demande :
04.04.84 Bulletin 84/14

(45) Mention de la délivrance du brevet :
09.11.88 Bulletin 88/45

(84) Etats contractants désignés :
**BE DE GB IT LU NL**

(56) Documents cités :
**DE-A- 2 605 361**
**DE-A- 2 605 369**
**FR-A- 2 220 117**
**FR-A- 2 301 146**
**FR-A- 2 308 269**

(73) Titulaire : **ELECTRICITE DE FRANCE Service National**
**2, rue Louis Murat**
**F-75008 Paris (FR)**

(72) Inventeur : **Drugeon, Daniel**
**183 rue Legendre**
**F-75017 Paris (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

## Description

La présente invention concerne les appareils électriques à accumulation calorique.

Ces appareils, par exemple les chauffe-eau ou les appareils de chauffage domestique à accumulation, sont généralement commutés sur le réseau électrique de distribution à une heure définie de la journée — par exemple vingt-deux heures — de manière à fonctionner pendant les « heures creuses », ce qui permet pour le distributeur d'optimiser sa production d'électricité en évitant que ces appareils (qui comme tous les appareils de chauffage, sont généralement de forte puissance) ne surchargent le réseau pendant les heures pleines (heures diurnes) quand la puissance appelée est importante, et en permettant au contraire de les faire fonctionner la nuit, lorsque la capacité de production d'énergie sur le réseau est excédentaire. En contrepartie, l'utilisateur bénéficie d'un tarif réduit pendant les heures creuses.

La mise en service de ces appareils est généralement assurée au moyen d'un relais télécommandé par des impulsions envoyées sur le réseau à l'heure dite. Elle peut également être assurée par un dispositif horloger prévu pour actionner un relais à cette même heure.

Ce mode de commutation produit une mise en service simultanée ou quasi-simultanée de tous les appareils d'une même région, d'où il résulte un brusque appel de puissance, néfaste tant du point de vue de la distribution que de celui de la production. Des systèmes destinés à réduire sensiblement l'appel de puissance pour tenir compte de la caractéristique de charge du réseau électrique ont été décrits dans le brevet français FR-A-2 301 146. Dans ce type de système, le circuit de commande de chauffage réduit ou arrête le courant de chauffage appliqué à l'élément chauffant de l'accumulateur pendant les intervalles de la période d'heures creuses pour lesquels on prévoit la charge électrique la plus importante sur le réseau.

De même, le brevet français FR-A-2 220 117 décrit un système de commande de préchauffage d'appareils de chauffage à accumulation pendant une période de bas tarif, la puissance étant commandée en fonction du temps, dans le sens de l'abaissement, au début de la période à bas tarif.

Ces types de systèmes présentent cependant l'inconvénient de provoquer une réduction ou un arrêt de la puissance appelée pendant la période d'heures creuses. Un des buts de la présente invention est de remédier à cet inconvénient, en faisant en sorte que, tout en fournissant la même énergie que dans le cas d'un appareil classique, la puissance soit appelée progressivement tout au long des heures creuses.

Pour cela, l'appareil comporte des moyens pour faire croître de manière graduelle, entre une valeur minimale et une valeur maximale, la puissance délivrée par les éléments chauffants pendant la période de fonctionnement de ceux-ci.

Dans un premier mode de réalisation, ces moyens comportent, en série avec les éléments chauffants, un circuit à semi-conducteur déclenché, commandé en phase par un générateur de rampe mis en service à l'heure définie de commutation, de manière à faire croître la puissance délivrée de façon continue au long de la période de fonctionnement.

Dans un second mode de réalisation, l'appareil comporte deux groupes d'éléments chauffants distincts, le premier groupe étant mis en service à l'heure définie de commutation, le second groupe étant ensuite commuté avec application d'un retard déterminé.

D'autres caractéristiques et avantages de l'invention apparaîtront à la lecture de la description détaillée ci-dessous, faite en référence aux dessins annexés, sur lesquels :

la figure 1 est un graphique montrant la variation de la puissance appelée en fonction du temps, pour le premier mode de réalisation,

la figure 2 est une vue schématique de l'appareil réalisé suivant ce premier mode de réalisation,

les figures 3 et 4 sont homologues des figures 1 et 2 pour le second mode de réalisation.

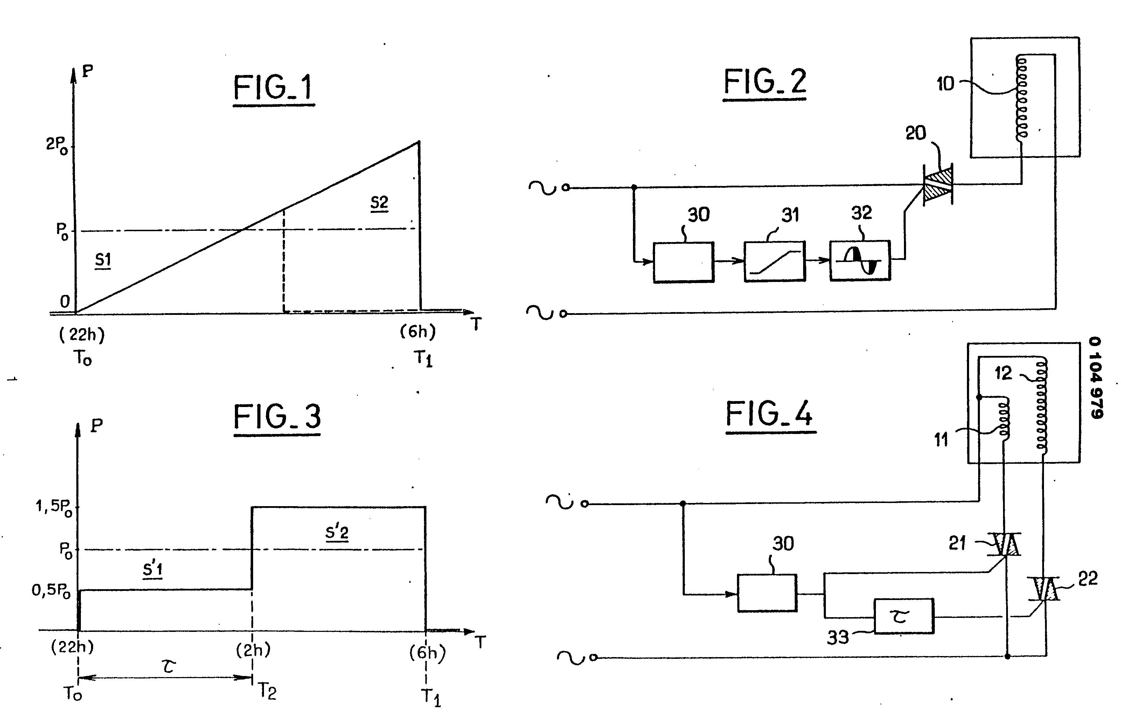

Dans le premier mode de réalisation, la puissance appelée P suit la loi de variation représentée figure 1 : entre l'instant $T_0$ correspondant à l'heure définie de commutation (par exemple vingt-deux heures) et l'instant $T_1$ correspondant à la fin de la période « heures creuses » (par exemple six heures du matin) la puissance augmente linéairement entre une valeur nulle et une valeur maximale. Pour que l'énergie fournie produise la même accumulation calorique qu'avec un élément chauffant fonctionnant, classiquement, à puissance constante, on démontre aisément que la puissance appelée maximale doit être le double de celle $P_0$ de cet élément chauffant classique ; l'énergie fournie est en effet la même si les deux aires $S_1$ et $S_2$ sont identiques.

Bien entendu, le diagramme de la figure 1 correspond à la fourniture de toute l'énergie nécessaire, correspondant par exemple à un chauffe-eau entièrement rempli d'eau froide à l'origine. Dans le cas où seulement une partie du volume d'eau chaude a été soutirée au cours de la journée, le fonctionnement est interrompu plus tôt (ligne tiretée de la figure 1). Il n'en demeure pas moins que, dans ce cas, la fourniture d'énergie aura été étalée sur plusieurs heures alors que, dans la solution classique, elle aurait été assurée par un fonctionnement à pleine puissance pendant un temps relativement bref à compter de l'instant $T_0$.

La figure 2 montre un exemple conforme à ce premier mode de réalisation, dans lequel l'élément chauffant 10 est relié en série avec un semi-conducteur déclenché 20 tel qu'un thyristor ou un triac, celui-ci étant commandé en phase par un circuit 32 en réponse aux signaux issus d'un générateur de rampe 31 déclenché par le circuit 30 qui reçoit les impulsions de télécommande transmises sur le réseau de distribution.

Dans le second mode de réalisation, illustré par les figures 3 et 4, la variation graduelle de puissance est obtenue par commutation successive de deux groupes d'éléments chauffants, le groupe chauffant de faible puissance étant mis en service le premier : on peut voir sur la figure 3 que, si l'on prévoit un retard $\tau$ d'enclenchement du groupe chauffant de plus forte puissance qui soit sensiblement la moitié de la durée $T_1$-$T_0$, il faudra prévoir un premier groupe chauffant de puissance $0,5\ P_0$ et un second groupe chauffant de puissance $P_0$ ($P_0$ étant défini de la même façon que dans le premier mode de réalisation) afin que les aires $S'_1$ et $S'_2$ soient égales.

Dans ces conditions, l'appareil n'appellerait à l'instant $T_0$ que la moitié, puis, éventuellement (au-delà de l'instant $T_2$ correspondant à la mise en service du second groupe d'éléments chauffants) une fois et demie la puissance nominale d'un appareil classique (le second groupe chauffant n'étant mis en service que si plus du tiers de la capacité du chauffe-eau a été soutiré dans la journée).

Sur la figure 4 on peut voir un exemple de réalisation d'un circuit assurant cette fonction : l'élément chauffant 11 de puissance $0,5\ P_0$ est mis en service par un relais, par exemple un relais statique à semi-conducteur déclenché 21 (bien qu'un relais électromécanique classique puisse également être utilisé) et le second élément chauffant 12, de puissance $P_0$ est commandé par un relais statique 22 à semi-conducteur.

Le relais statique 21 est commandé immédiatement par le circuit 30 qui reçoit les impulsions de télécommande envoyées sur le réseau ; le relais statique 22 est commandé avec application d'un retard $\tau$ par le circuit temporisateur 33.

Il est avantageux d'utiliser un circuit temporisateur de précision médiocre (par exemple une temporisation de quatre heures ± une heure) qui, outre son faible coût, permet d'assurer la dispersion des caractéristiques des appareils et par suite d'étaler l'enclenchement du second élément chauffant de tous les appareils situés dans un même secteur de distribution.

## Revendications

1. Appareil électrique à accumulation calorique, du type comportant au moins un groupe d'éléments chauffants alimentés par le réseau de distribution électrique et commutés sur celui-ci à une heure définie (T0) de la journée, cet appareil comportant :

- des moyens pour faire croître, de manière graduelle et indépendante du niveau résiduel d'accumulation calorique, la puissance (P) délivrée par les éléments chauffants d'une valeur minimale à une valeur maximale, en fonction d'un paramètre temporel, pendant la période de fonctionnement de ceux-ci, la valeur minimale de la puissance (P) délivrée étant sensiblement nulle, lesdits moyens pour faire croître la puissance comportant, en série avec les éléments chauffants (10) un circuit à semi-conducteur déclenché (20) commandé en phase par un circuit (32) en réponse aux signaux issus d'un générateur de rampe (31) mis en service à l'heure définie de commutation, de manière à faire croître la puissance délivrée, de façon continue à partir de la valeur minimale, tout au long de la période de fonctionnement,

- un circuit à semi-conducteur déclenché (20, 21, 22) réalisant la mise en service de chaque groupe d'éléments chauffants,

- un circuit (30) récepteur d'impulsions de télécommande transmises sur le réseau de distribution réalisant la commutation à l'heure définie de la journée.

2. Appareil selon la revendication 1, dans lequel la rampe issue du générateur de rampe (31) est linéaire, la valeur maximale de la puissance (P) délivrée étant sensiblement le double de celle (P0) d'un élément chauffant fonctionnant à puissance constante et produisant une énergie calorique totale identique.

3. Appareil selon la revendication 1, lequel comporte deux groupes d'éléments chauffants distincts, le premier groupe (11) étant mis en service à l'heure définie de commutation (T0), le second groupe (12) étant ensuite commuté avec application d'un retard ($\tau$) déterminé.

4. Appareil selon la revendication 3, dans lequel la puissance délivrée par le premier groupe (11) est sensiblement la moitié de celle (P0) d'un élément unique fonctionnant à puissance constante et produisant une énergie calorique totale identique, la puissance délivrée par le second groupe (12) étant sensiblement double de celle du premier groupe et le retard (33, $\tau$) étant de l'ordre de la moitié de la durée maximale de fonctionnement de l'appareil correspondant à une accumulation calorique complète.

## Claims

1. Electrical apparatus with heat storage of the type comprising at least one set of heating elements supplied by the electrical distribution system and switched over to it at a defined time (T0) of day, this apparatus comprising :

- means for increasing, gradually and independently of the level of residual heat stored, the power (P) delivered by the heating elements from a minimum value to a maximum value, as a function of a time parameter during the period of operation thereof, the minimum value of the power (P) delivered being substantially zero, said means for increasing the power comprising, in series with the heating elements (10), a triggered solid-state circuit (20) which is phase-controlled by a circuit (32) in response to the signals issuing from a ramp generator (31) which is put into operation at the defined switching over time so as to increase the power delivered, continuously from the minimum value, throughout the operating period,

- a triggered solid-state circuit (20, 21, 22) which puts each set of heating elements into operation,
- a circuit (30) which receives remote-control pulses transmitted over the distribution system and effects the switching over operation at the defined time of day.

2. Apparatus according to claim 1, in which the ramp issuing from the ramp generator (31) is linear, the maximum value of the power (P) delivered being substantially twice that (P0) of a heating element operating at constant power and producing identical total thermal energy.

3. Apparatus according to claim 1, comprising two distinct sets of heating elements, the first set (11) being put into operation at the defined switching over time (T0), and the second set (12) then being switched over after a predetermined delay (τ).

4. Apparatus according to claim 3, in which the power delivered by the first set (11) is substantially half that (P0) of a single element operating at constant power and producing identical total thermal energy, the power delivered by the second set (12) being substantially twice that of the first set and the delay (33, τ) being about half the maximum period of operation of the apparatus, corresponding to total heat storage.

**Patentansprüche**

1. Elektrische Vorrichtung zur Wärmespeicherung mit mindestens einer Gruppe von Heizelementen, die von dem elektrischen Verteilernetz gespeist und zu diesem zu einer bestimmten Tageszeit (T0) zugeschaltet werden, mit :

Einrichtungen, um die Leistung (P), die von den Heizelementen geliefert wird, während deren Betriebsdauer, graduell und unabhängig vom restlichen Niveau der Wärmespeicherung, von einem Mindestwert auf einen Höchstwert, abhängig von einem zeitlichen Parameter, zu steigern, wobei der Mindestwert der gelieferten Leistung (P) im wesentlichen null ist, und die genannten Einrichtungen zur Leistungssteigerung, in Reihe mit den Heizelementen (10), eine Halbleiterschaltung (20) umfassen, die durch eine Schaltung (32) phasengesteuert wird, in Antwort auf die Signale, die von einem Sägezahngenerator (31) stammen, welcher in der vorbestimmten Zuschalt-Stunde betätigt wird, so daß die gelieferte Leistung, im Verlaufe der ganzen Betriebsdauer, kontinuierlich vom Mindestwert aus, gesteigert wird,

- einer ausgelösten Halbleiterschaltung (20, 21, 22), welche die Inbetriebnahme jeder Gruppe von Heizelementen bewirkt,
- eine Empfänger-Schaltung (30) für auf das Verteilernetz übertragene Fernsteuerungs-Impulse, welche das Zuschalten zur bestimmten Tageszeit bewirkt.

2. Vorrichtung nach Anspruch 1, bei welcher der vom Sägezahngenerator (31) stammende Anstieg linear ist, wobei der Höchstwert der gelieferten Leistung (P) im wesentlichen doppelt so hoch ist wie diejenige (P0) eines Heizelementes, welches mit konstanter Leistung arbeitet und eine identische Gesamtwärmeenergie erzeugt.

3. Vorrichtung nach Anspruch 1, die zwei Gruppen von unterschiedlichen Heizelementen umfaßt, von denen die erste Gruppe (11) zur bestimmten Zuschalt-Zeit (T0) in Betrieb genommen wird und die zweite Gruppe (12) anschließend mit einer festgelegten Verzögerung (τ) zugeschaltet wird.

4. Vorrichtung nach Anspruch 3, bei welcher die durch die erste Gruppe (11) gelieferte Leistung im wesentlichen halb so hoch ist wie diejenige (P0) eines einzelnen Elementes, das mit konstanter Leistung arbeitet und eine identische Gesamtwärmeenergie produziert, wobei die von der zweiten Gruppe (12) gelieferte Leistung im wesentlichen doppelt so hoch ist wie diejenige der ersten Gruppe und die Verzögerung (33, τ) größenordnungsmäßig halb so lang ist wie die maximale Betriebsdauer der Vorrichtung, die einer vollständigen Wärmespeicherung entspricht.

FIG.1

FIG.2

FIG.3

FIG.4